# EUROPEAN PATENT SPECIFICATION

(11) **EP 1 488 900 B1**
(45) Date of publication and mention of the grant of the patent: **22.11.2006**
(21) Application number: 04253610.2
(22) Date of filing: 17.06.2004
(51) Int. Cl.: B28D 1/14, B28D 1/30

(54) **Forward driving system for use in drilling masonry structures**
Vortriebsystem zur Anwendung beim Bohren von Mauerwerk
Système d'avancement utilisable dans le forage de maçonnerie

(30) Priority: 19.06.2003 GB 0314266
(43) Date of publication of application: 22.12.2004
(60) Divisional application: 06007035.6
(73) Proprietor: Edscer, William George, Uckfield, East Sussex TN22 4BY (GB)
(72) Inventor: Edscer, William George, Uckfield, East Sussex TN22 4BY (GB)
(74) Representative: Swindell & Pearson

(56) References cited:
- DE-A- 10 152 446
- DE-A- 19 810 806
- DE-C- 409 611
- FR-A- 881 843

## Description

The invention relates to a method of drilling through a masonry structure according to the preamble of claim 1 and an apparatus for drilling through the same according to the preamble of claim 14. The invention is of particular application when the drilling of masonry structures. drilling curved paths through masonry structures.

Such a method and such an apparatus are known from DE19810806 A1 which discloses a jig for producing bores in the walls of buildings

International patent application WO/0179649 (in the name of the present applicant) discloses various apparatus for drilling curved paths through masonry structures. The applicant has realised that one difficulty when drilling curved paths is that of providing the necessary reaction force for the drill to enable it to move forward through the masonry structure.

According to the invention there is provided a method of drilling through a masonry structure according to claim 1.

The movement may be assisted by using the reaction force to propel the drilling means through the masonry structure, and/or to alter its direction of movement. Further embodiments of the method are disclosed in the dependent claims 2-13.

According to the invention there is further provided an apparatus for drilling through a masonry structure according to claim 14.

Further embodiments of the apparatus are disclosed in the dependent claims 15-20.

Embodiments of the invention will be described for the purpose of illustration only with reference to the accompanying drawings in which:-
Fig. 1 is a diagrammatic sectional view of a first embodiment of the invention;
Fig. 2 is a diagrammatic sectional view of a second embodiment of the invention, with a detail of part of the reaction member enlarged;
Fig. 3 is a diagrammatic sectional view of a third embodiment of the invention;
Fig. 4 is a diagrammatic side view of a reaction member for use with the embodiment of Fig. 3;
Fig. 5 is a diagrammatic sectional view of a drill head for use in accordance with various embodiments of the invention;
Fig. 6A and 6B are front and side views of an alternative reaction member;
Fig. 7 is a diagrammatic sectional view of a drill according to a further embodiment of the invention;
Fig. 8A is a diagrammatic sectional view of a drill according to a further embodiment of the invention; and Fig. 8B is an enlarged detail in sectional view of the piston of Fig. 8A; and
Fig. 9 illustrates in section the ends of various different shapes of reaction member.

The forward driving apparatus and method of invention is particularly applicable for use with the various drilling apparatus described in International patent application no. PCT/GB01/01735 (publication number WO/0179649). This patent application describes drilling apparatus which can be used to drill curved paths through masonry structures. Such apparatus is particularly useful for example when reinforcing curved masonry structures, such as masonry arched bridges. Using the drilling apparatus previously described, elongate bores may be drilled through such arched structures generally in line with the curvature of the arch, and reinforcing bars may be inserted in these bores. This method is described in patent no. GB 2,302,896, also in the name of the present applicant.

The applicant has realised that one difficulty when drilling a curved bore through a structure is that of providing the necessary reaction force to maintain the forward movement of the drill through the structure. Because of the curvature of the drilling path, it can be more difficult to provide such a reaction force down the shaft and therefore the masonry structure must be relied upon to provide the reaction force. However, such masonry structures are often relatively old and may not be sufficiently strong to provide this reaction force effectively. In addition, accurately controlling the direction of drilling can be difficult.

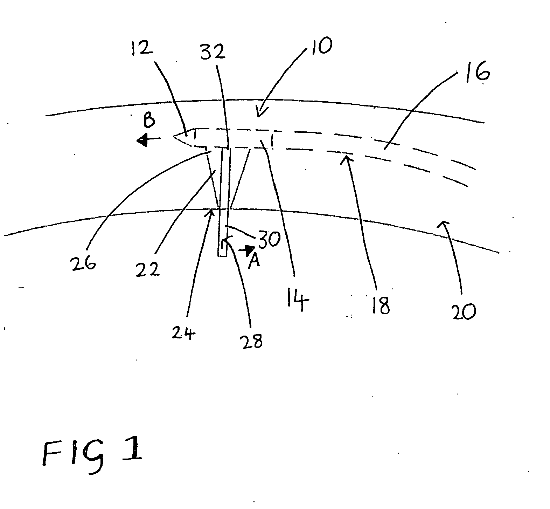

Referring to Fig. 1, there is illustrated a drill 10 including a drill head 12, a drill body 14 and a flexible drive 16. The drill 10 is shown part way through drilling a curved bore 18 through a curved masonry structure 20.

The forwardly directed force keeping the drill moving through the masonry is provided partly by the drilling action of the drill bit in the masonry and partly by a driving force along the flexible drive 16. However, particularly if a hard piece of masonry is encountered, this force may not be sufficient, and the drill may cease its forward movement or may start to move in the wrong direction. When this occurs, the method and apparatus of the invention allows the drill to be propelled forward, as follows.

It may be seen that a slot 22 has been drilled into the masonry structure 20, from its underside 24. In the illustrated embodiment, the slot 22 is narrow where it first enters the masonry structure 20 but opens out in a wedge shape towards a wide part 26, where the slot meets the bore 18. However, the slot may have parallel sides, for example if mortar is simply removed from between bricks.

A reaction member in the form of a lever 28 is provided within the slot 22. The reaction member includes a lower part 30 which protrudes from the slot and an end part 32 which may engage the drill 10 as described below.

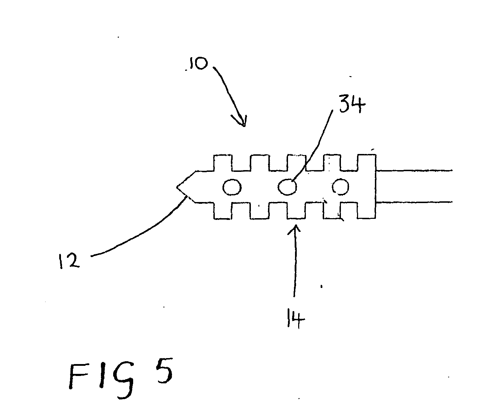

Referring to Fig. 5, the drill body 14 is provided with a number of holes 34, of generally complementary shape to the end part 32 of the lever. The end part 32 of the lever may thus be inserted into one of the holes 34, to form an engagement between the lever 28 and the drill body 14. Referring again to Fig. 1, with the drill 10 stationary the end part 34 is inserted into one of the holes 32, and the lower part 30 of the lever 28 is forced in the direction of the arrow A, causing the lever to pivot in the slot and urge the drill body 14 forwardly along its drilling path through the masonry structure (arrow B). The drill 10 may thereby be forced through any particularly hard areas of masonry, before normal drilling recommences. The drill may also be manipulated to change its direction if necessary.

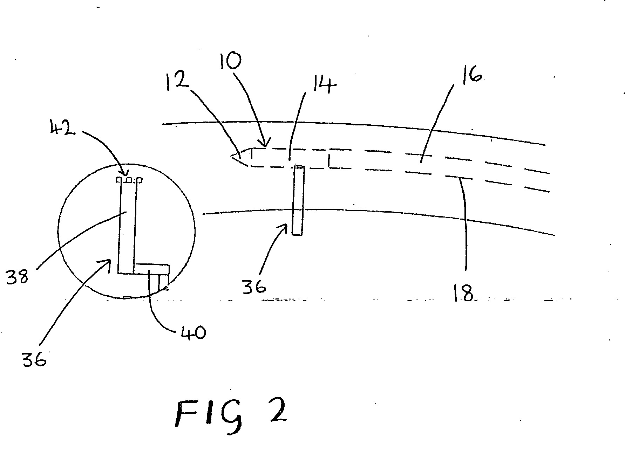

Referring to Fig. 2, there is illustrated a second embodiment of the invention. Parts corresponding to those shown in Fig. 1 are given the same reference numerals. In the Fig. 2 embodiment, the apparatus includes a reaction member in the form of a gear rod 36. The gear rod includes a hollow shaft 38 provided with a handle 40 at one of its ends and a gear 42 at its other end.

The drill body 14 includes grooves or threads which can engage the teeth of the gear 42 such that when the handle 40 is used to rotate the shaft 38 about its own axis, the movement of the gear 42 causes forward movement of the drill 10 through the masonry structure.

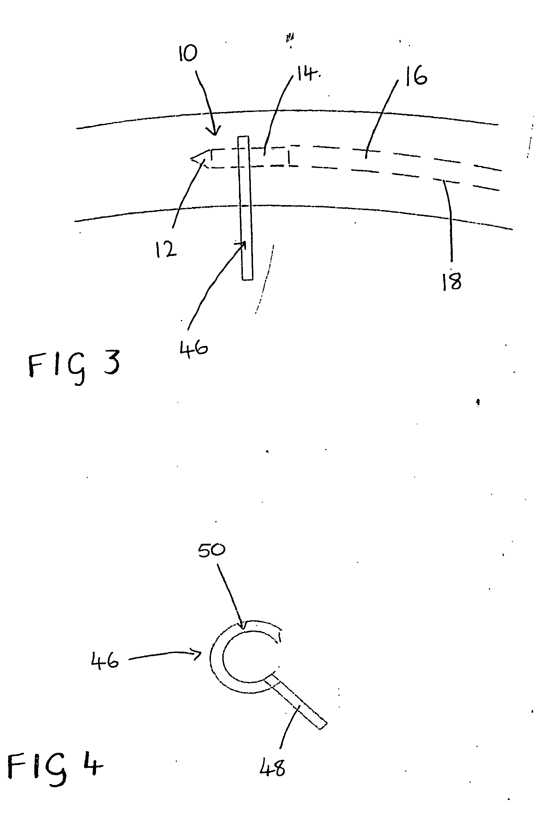

Referring to Figs. 3 and 4, there is illustrated a further embodiment of the invention in which corresponding parts are again given the same reference numerals. In this embodiment, a reaction member in the form of a threaded guide 46 is provided. The threaded guide 46 includes an elongate shaft 48 and a ring member 50 which is part-annular shaped and internally threaded. The drill 10 for use in this embodiment of the invention includes an external thread on its body 14 (not visible in Fig. 3). The internal thread on the ring member 50 is able to engage with the external thread on the drill head 12.

In this embodiment of the invention, the threaded guide is first inserted through a hole 52 in the masonry structure before the drill is advanced forward such that its drill head 12 passes through the ring member 50 of the threaded guide 46 and its threaded drill body 14 comes into engagement with the thread on the member 50. Continued slow rotation of the drill causes it to advance in the forward direction, with the engagement of the drill body 14 with the internal thread on the annular member 50 providing a forward reaction force to maintain the forward movement, and to control the direction.

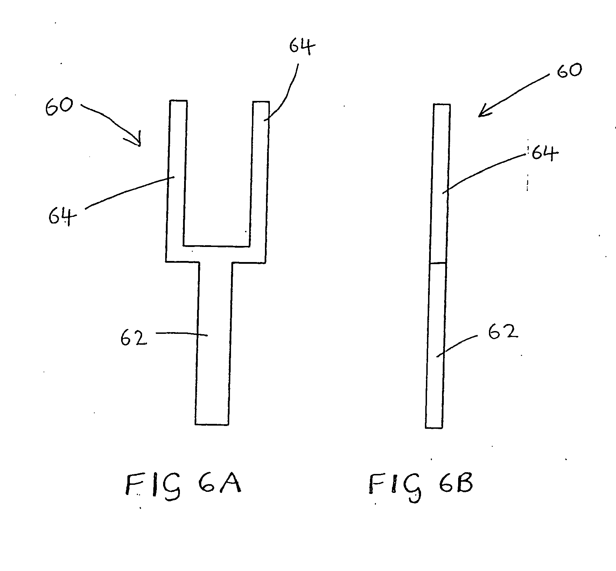

Referring to Figs 6A and 6B there is illustrated an alternative reaction member 60. The reaction member 60 includes an elongate shaft 62 and two prongs 64. The prongs 64 are able to embrace and engage a drill head 12 or drill body 14. The reaction member 60 may then be manipulated to urge the drill forwards as described previously.

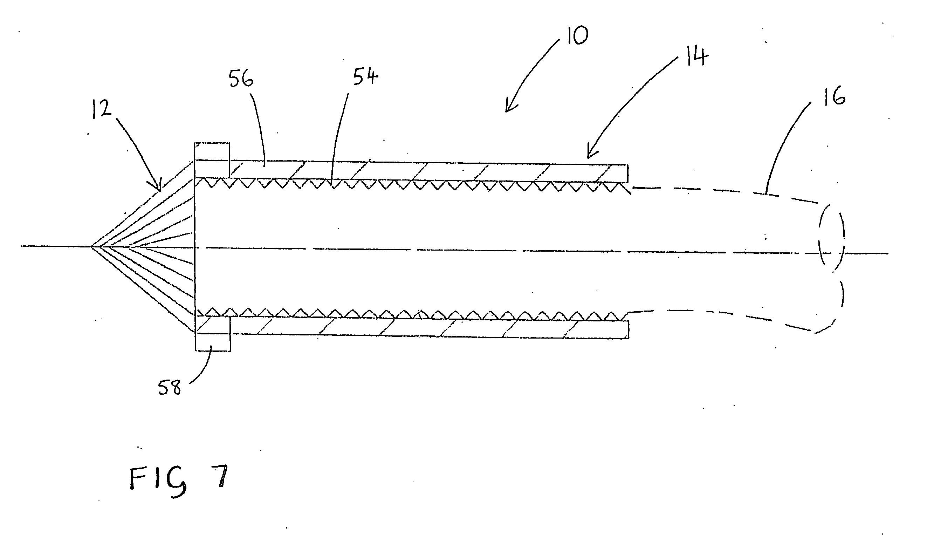

Fig. 7 illustrates an alternative embodiment of drill 10 according to the invention. The drill 10 includes a drilling head 12, a drill body 14 and a flexible drive 16. The drill body 14 is provided with an external thread 54. A collar 56, which includes an internal thread, surrounds and engages the drill body 14. Thus in normal use the external thread of the drill body is not exposed.

The collar 56 further includes a retractable cam 58 similar to that described in more detail in earlier patent application number WO/0179649. When the drill 10 is used to drill normally through the masonry structure, its direction of rotation is such that the cam has no effect. However, if the drill is rotated in an opposite direction, the cam fouls against an internal wall of the bore drilled through the structure. This prevents further forward movement of the cam 58 and therefore the collar 56 until the drill direction is again reversed.

The drill of Fig. 7 may be used as follows. The drill 10 is used to drill through the structure in the normal way, with the drilling direction such that the cam remains in its neutral, inactive position. When the drill encounters a hard material such that an additional forward force is required, the drill initially stops. The direction of rotation may then be reversed to activate the cam 58 which secures the collar 56 in place within the bore. The drilling may then be resumed, using the opposite drilling direction to that used previously such that the cam 58 remains in engagement with the bore 18. This extends the drill body out in front of the collar, with the engagement of the cam against the internal walls of the drilling bore 18 causing the necessary reaction force. The drill 10 would include two shafts, an outer one to operate the cam 58 and an inner one to turn the drill head.

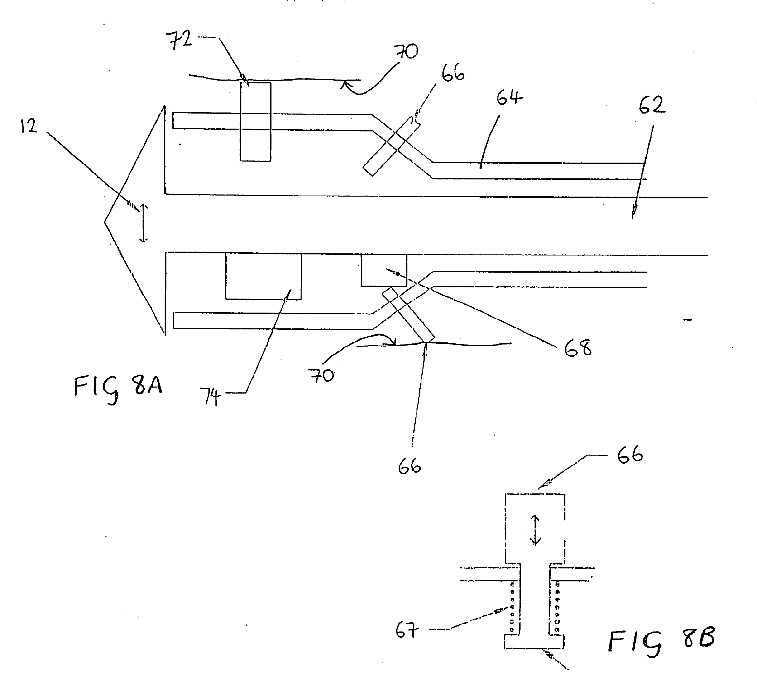

Figs. 8A and 8B illustrate a further embodiment of a drill 10 according to the invention. The drill 10 includes a drilling head 12 and a flexible inner drive shaft 62 which drives the rotation of the head. The drilling head 12 may be rotated in either direction to drill through the structure. The drill 10 further includes an outer shaft 64, concentric with the shaft 62. The inner and outer shafts 62 and 64 may be caused to rotate together or independently.

The outer shaft 64 is provided with a reaction member in the form of a piston 66 (see the detailed view in Fig. 8B). The piston 66 is moveable between a passive position illustrated by the piston shown at the top of Fig. 8, and an active position illustrated by the piston shown at the bottom of Fig. 8. The piston is biased by a compression spring 67 (see Fig. 8B) into the passive position.

The inner shaft 62 is provided with a radial projection in the form of a cam 68. When the cam 68 is radially aligned with the piston 66, it causes the piston 66 to move from its passive position to its active position. As such movement takes place, the piston engages and pushes against an internal wall 70 of the bore.

The drill of Figs. 8A and 8B may be used as follows. The drill 10 is used to drill through the structure in the normal way, with the inner shaft 62 and outer shaft 64 being caused to rotate together. The relative positions of these shafts are such that the cam 68 does not engage the piston 66 and the piston 66 remains in its passive position. When the drill 10 encounters a hard material such that an additional forward force is required, the drill initially stops. At this time, the outer shaft 64 may be caused to stop rotating, and the inner shaft 62 rotated slowly, thereby causing relative moment of the inner and outer shafts. This brings the cam 68 into a position in which it pushes the piston 66 into its active position. This causes a reaction force against an inner wall 70 of the bore, thereby propelling the drill 10 forwards within the bore.

As an alternative or in addition to the piston 66, the drill 10 may be provided with a side piston 72 which may be caused by a cam 74 to extend outwardly against the inner wall 70 of the bore, thereby causing a sideways movement of the drill 10, to assist a change in direction.

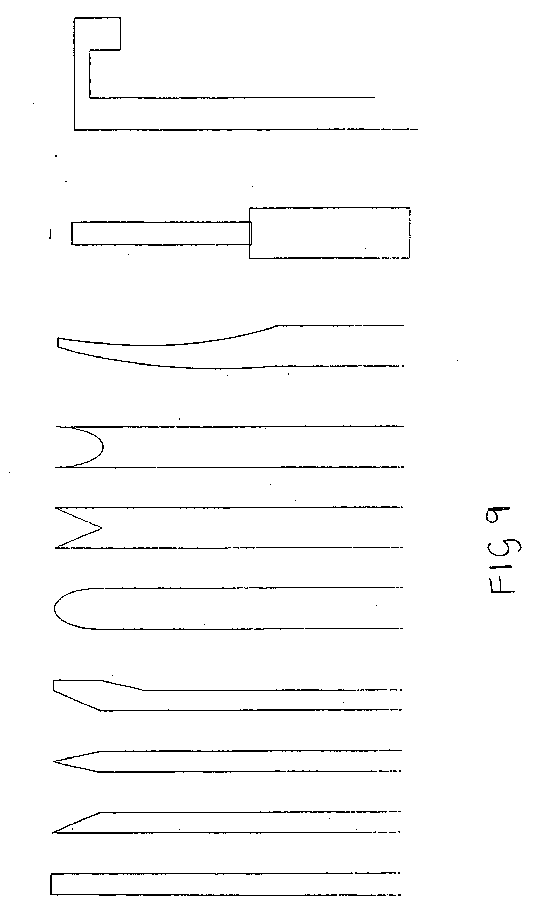

Various different shapes of reaction member end are illustrated in Fig. 9.

The flexible drive 16 may have a hollow centre for fluid supply to the drill head 12 and/or for waste removal from the drill head, or to contain cable, fibre optic or other communication cables. Internal tubing may be provided within the flexible drive 16 for air or fluid transfer to power the drill head, for hydraulic or air-powered motors.

The drilling head 12 may be steered by cams activated by the shaft or by pressure of water, air, gas, etc, or by pressure jets located in the head. Alternatively the drill head 12 may be steered by offset pilot drills in the main bore head or by radio controlled, X-ray, radar or similar guidance systems.

The drill head may further include radio controlled detection systems or may react with remote sensors on reaction members inserted in the masonry to allow the drill head to find and locate with the reaction member. The drill head may be powered by a drive motor incorporated in the head driven by air, water, electricity, etc. This may have radio, magnetic, electrical, air, water, gas, or fibre optic operated controls. It may relate with the reaction member to guide the drill head and provide feedback in the same way. The head may further communicate with a control centre by radio waves, electricity, fibre optics or through pressure plates/indicators/sensors to allow monitoring of the progress and location of the drill head. The drill head may alternatively communicate with the control centre through communication by a central cable located in the flexible drive shaft.

The reaction member may contain radio wave, radar, magnetic or electrical sensors and transmitter and locating devices to allow the plotting of each position. The reaction member may also provide guidance to drill head and remote operator by transmitting signals. The reaction member may be inserted into the masonry ahead of the drill head and may be used to inject glues, grouts or other materials, or to drain off water and waste materials. Further it may be used as an injection ports to facilitate material injection.

## Claims

1. A method of drilling through a masonry structure (20), the method including the steps of:
providing drilling means which form part of a drill including a drilling head and a shaft attached thereto (10) and using the drilling means to drill a bore (18) in the masonry structure (20);
providing a reaction member (28);
**characterised in** inserting the reaction member (28) into the masonry structure separately from the drill: and
causing engagement of the reaction member (28) with the masonry structure (20) and with the drilling means (10) within the masonry structure (20), such that the reaction member (28) may provide a reaction force to assist the movement of the drilling means (10) through the structure as it drills the bore.

2. A method according to Claim 1 wherein the reaction member (28) is elongate, and is inserted into the masonry structure in a direction generally along its length.

3. A method according to Claim 2 wherein the reaction member (28) is inserted into the structure in a direction which is substantially transverse to the bore.

4. A method according to Claim 2 or Claim 3 wherein once inserted the reaction member (28) is at least partly encased in the masonry structure (20) such that the masonry resists movement of the reaction member (28) in a direction transverse to its direction of insertion into the structure.

5. A method according to any of Claims 1 to 4 wherein the bore (18) is curved, the masonry structure (20) is a masonry arch and the reaction member (28) is inserted into the structure from an underside of the arch.

6. A method according to any of Claims 1 to 5 wherein the method includes the step of initially drilling a hole for the reaction member, the hole meeting the bore, and then inserting the reaction member into the hole.

7. A method according to Claim 6 wherein the hole comprises a slot (22) formed by removing mortar from between adjacent layers of masonry members such as bricks.

8. A method according to Claim 6 or Claim 7 wherein the hole (22) for the reaction member increases in diameter as it extends into the structure towards the drill or bore.

9. A method according to Claim 8 wherein the method includes the step of inserting the reaction member (28) into the hole, bringing the reaction member into engagement with the drill (10) and exerting a backward force on a part of the reaction member located externally of the masonry structure in order to impart a forwardly directed force to the drill, to lever the drill forward.

10. A method according to Claim 9 wherein the method includes the step of providing a gear (42) on the reaction member (36) which engages external grooves on the drill such that rotation of the reaction member causes forward movement of the drill.

11. A method according to Claim 9 wherein the method includes the step of providing the reaction member with threaded guide (46) including an opening through which the drill may pass.

12. A method according to Claim 11 wherein the threaded guide (46) includes an annular or part-annular member (50), which has an internal thread, the internal thread being adapted for engagement with a complementary thread on the drill.

13. A method according to Claim 12 wherein on rotation of the drill, engagement of the respective threads on the drill (10) and the threaded head (46) causes movement of the drill through the head, the reaction member providing a reaction force to assist the movement.

14. An apparatus for drilling through masonry structure (20), the apparatus including:
drilling means (10) for drilling a bore (18) in the masonry structure (20), the drilling means forming part of a drill including a drilling head and a shaft attached thereto; and
**characterised in** including a reaction member (28) configured for insertion into the masonry structure separately from the drill, and adapted for engagement with the masonry structure and with the drilling means at a position within the masonry structure, to provide a reaction force to assist movement of the drilling means through the structure, as it drills the bore.

15. An apparatus according to Claim 14 wherein the reaction member includes an end which is adapted to engage a hole or groove in the drill (10) such that the reaction member may be used to lever the drill forward along the general path of movement of the drill through the structure.

16. An apparatus according to Claim 15 wherein the drill is provided with external grooves or threads.

17. An apparatus according to Claim 16 wherein the reaction member (36) includes a gear (42) which is able to engage the grooves or thread of the drill such that rotation of the reaction member causes movement of the drill along the drilling path.

18. An apparatus according to Claim 17 wherein the reaction member (28) includes an elongate shaft, the gear being provided at an end of a shaft, the gear teeth projecting in a direction generally parallel to the shaft and rotation of the shaft about its own axis causing the gear to rotate and thereby cause movement of the drill along the drilling path.

19. An apparatus according to Claim 16 wherein the reaction member (28) includes a shaft and a head including an opening through which the drill (20) may pass.

20. An apparatus according to Claim 19 wherein the head includes an annular or part-annular member, which has an internal thread, the internal thread being adapted for engagement with a complementary thread on the drill, so that on rotation of the drill, engagement of the respective threads on the drill and the head causes movement of the drill along the drilling path through the head, the reaction member providing a reaction force to assist the movement.

## Patentansprüche

1. Verfahren zum Bohren durch ein Mauerwerk (20), wobei das Verfahren die folgenden Schritte aufweist:
Bereitstellen von Bohrmitteln, die einen Teil eines Bohrers bilden mit einem Bohrkopf und einer daran befestigten Welle (10) und Verwenden des Bohrmittels, um eine Bohrung (18) in das Mauerwerk (20) zu bohren;
Bereitstellen eines Reaktionsgliedes (28);
**gekennzeichnet durch** von dem Bohrer gesondertes Einführen des Reaktionsgliedes (28) in das Mauerwerk; und
In-Eingriff-Bringen des Reaktionsgliedes (28) mit dem Mauerwerk (20) und mit dem Bohrmittel (10) innerhalb des Mauerwerks (20) derart, dass das Reaktionsglied (28) eine Reaktionskraft erzeugen kann, um die Bewegung des Bohrmittels (10) durch das Mauerwerk hindurch zu unterstützen, während es die Bohrung bohrt.

2. Verfahren nach Anspruch 1, **dadurch gekennzeichnet, dass** das Reaktionsglied (28) länglich ist und in das Mauerwerk in einer Richtung im wesentlichen entlang seiner Länge eingeführt wird.

3. Verfahren nach Anspruch 2, **dadurch gekennzeichnet, dass** das Reaktionsglied (28) in das Mauerwerk in einer Richtung eingeführt wird, die im wesentlichen in Querrichtung zu der Bohrung verläuft.

4. Verfahren nach Anspruch 2 oder 3, **dadurch gekennzeichnet, dass** das Reaktionsglied (28) nach seinem Einfügen zumindest teilweise in dem Mauerwerk (20) derart eingeschlossen ist, dass das Mauerwerk einer Bewegung des Reaktionsgliedes (28) in einer Richtung quer zu seiner Einführungsrichtung in das Mauerwerk widersteht.

5. Verfahren nach einem der Ansprüche 1 bis 4, **dadurch gekennzeichnet, dass** die Bohrung (18) gekrümmt ist, dass das Mauerwerk (20) ein Mauerwerk-Bogen ist und das Reaktionsglied (28) von einer unteren Seite des Bogens in das Mauerwerk eingeführt wird.

6. Verfahren nach einem der Ansprüche 1 bis 5, **dadurch gekennzeichnet, dass** das Verfahren einen Schritt zum anfänglichen Bohren eines Loches für das Reaktionsglied enthält, wobei das Loch auf die Bohrung trifft, woraufhin das Reaktionsglied in das Loch eingeführt wird.

7. Verfahren nach Anspruch 6, **dadurch gekennzeichnet, dass** das Loch einen Schlitz (22) aufweist, der durch Entfernen von Mörtel zwischen benachbarten Schichten von Mauerwerk-Gliedern, wie z.B. Ziegeln, gebildet wird.

8. Verfahren nach Anspruch 6 oder 7, **dadurch gekennzeichnet, dass** das für das Reaktionsglied bestimmte Loch (22) entlang seiner Ausdehnung in das Mauerwerk zu dem Bohrer oder der Bohrung hin einen zunehmenden Durchmesser aufweist.

9. Verfahren nach Anspruch 8, **dadurch gekennzeichnet, dass** das Verfahren einen Schritt zum Einführen des Reaktionsgliedes (28) in das Loch, In-Eingriff-Bringen des Reaktionsgliedes mit dem Bohrer (10) und Ausüben einer rückwärts gerichteten Kraft auf einen Teil des Reaktionsgliedes enthält, der sich außerhalb des Mauerwerks befindet, um eine vorwärts gerichtete Kraft auf den Bohrer auszuüben, um den Bohrer vorwärts zu hebeln.

10. Verfahren nach Anspruch 9, **dadurch gekennzeichnet, dass** das Verfahren einen Schritt enthält zum Bereitstellen eines Zahnrades (42) auf dem Reaktionsglied (36), das mit äußeren Rillen auf dem Bohrer derart in Eingriff gelangt, dass das Reaktionsglied eine Vorwärtsbewegung des Bohrers bewirkt.

11. Verfahren nach Anspruch 9, **dadurch gekennzeichnet, dass** es einen Schritt enthält zum Bereitstellen des Reaktionsgliedes mit einer Gewindeführung (46) und mit einer Öffnung, durch die der Bohrer hindurchtreten kann.

12. Verfahren nach Anspruch 11, **dadurch gekennzeichnet, dass** die Gewindeführung (46) ein ringförmiges oder teilweise ringförmiges Glied (50) enthält, das ein Innengewinde hat, wobei das Innengewinde dazu ausgelegt ist, um mit einem komplementären Gewinde auf dem Bohrer in Eingriff zu gelangen.

13. Verfahren nach Anspruch 12, **dadurch gekennzeichnet, dass** bei einer Rotation des Bohrers ein Eingriff der Gewinde des Bohrers (10) bzw. des Gewindekopfes (46) eine Bewegung des Bohrers durch den Kopf hindurch bewirkt, wobei das Reaktionsglied eine Reaktionskraft erzeugt, um die Bewegung zu unterstützen.

14. Vorrichtung zum Bohren durch ein Mauerwerk (20), wobei die Vorrichtung aufweist:
Bohrmittel (10) zum Bohren einer Bohrung (18) in das Mauerwerk (20), wobei die Bohrmittel einen Teil eines Bohrers mit einem Bohrkopf und einer daran befestigten Welle bilden; und
**dadurch gekennzeichnet, dass** die Vorrichtung ein Reaktionsglied (28) enthält, das ausgestaltet ist, um von dem Bohrer gesondert in das Mauerwerk eingeführt zu werden, und für einen Eingriff mit dem Mauerwerk und mit dem Bohrmittel an einem Ort innerhalb des Mauerwerks ausgelegt ist, um eine Reaktionskraft zu erzeugen, um die Bewegung des Bohrmittels durch das Mauerwerk hindurch zu unterstützen, während es die Bohrung bohrt.

15. Vorrichtung nach Anspruch 14, **dadurch gekennzeichnet, dass** das Reaktionsglied ein Ende enthält, das dazu ausgelegt ist, um mit einem Loch oder einer Rille in dem Bohrer (20) derart in Eingriff zu gelangen, dass das Reaktionsglied verwendet werden kann, um den Bohrer entlang seines wesentlichen Bewegungspfades des Bohrers durch das Mauerwerk vorwärts zu hebeln.

16. Vorrichtung nach Anspruch 15, **dadurch gekennzeichnet, dass** der Bohrer mit äußeren Rillen oder Gewinden ausgestattet ist.

17. Vorrichtung nach Anspruch 16, **dadurch gekennzeichnet, dass** das Reaktionsglied (36) ein Zahnrad (42) enthält, das mit den Rillen oder dem Gewinde des Bohrers derart in Eingriff gelangen kann, dass eine Rotation des Reaktionsgliedes eine Bewegung des Bohrers entlang des Bohrweges erzeugt.

18. Vorrichtung nach Anspruch 17, **dadurch gekennzeichnet, dass** das Reaktionsglied (28) eine längliche Welle enthält, wobei das Zahnrad an einem Ende einer Welle vorgesehen ist, und wobei die Zahnrad-Zähne sich in einer Richtung im wesentlichen parallel zu der Welle erstrecken und eine Rotation der Welle um ihre eigene Achse eine Rotation des Zahnrades bewirkt und **dadurch** eine Bewegung des Bohrers entlang des Bohrweges bewirkt.

19. Vorrichtung nach Anspruch 16, **dadurch gekennzeichnet, dass** das Reaktionsglied (28) eine Welle und einen Kopf mit einer Öffnung enthält, durch die der Bohrer (20) hindurchtreten kann.

20. Vorrichtung nach Anspruch 19, **dadurch gekennzeichnet, dass** der Kopf ein ringförmiges oder teilweise ringförmiges Glied enthält, das ein Innengewinde hat, wobei das Innengewinde für einen Eingriff mit einem komplementären Gewinde auf dem Bohrer ausgelegt ist, so dass bei einer Rotation des Bohrers ein Eingriff des jeweiligen Gewindes auf dem Bohrer bzw. auf dem Kopf eine Bewegung des Bohrers entlang des Bohrweges durch den Kopf bewirkt, wobei das Reaktionsglied eine Reaktionskraft erzeugt, um die Bewegung zu unterstützen.

## Revendications

1. Procédé de perçage à travers une structure de maçonnerie (20), le procédé comprenant les étapes consistant à :
fournir des moyens de perçage qui forment une partie d'un foret et comprennent une tête de perçage et une barre attachée à celle-ci (10), et utiliser les moyens de perçage pour percer un alésage (18) dans la structure de maçonnerie (20) ;
fournir un élément de réaction (28) ;
**caractérisé par** l'insertion de l'élément de réaction (28) dans la structure de maçonnerie séparément du foret ; et
provoquer l'engagement de l'élément de réaction (28) avec la structure de maçonnerie (20) et avec les moyens de perçage (10) au sein de la structure de maçonnerie (20), de façon telle que l'élément de réaction (28) puisse fournir une force de réaction pour assister le déplacement des moyens de perçage (10) à travers la structure à mesure qu'ils percent l'alésage.

2. Procédé selon la revendication 1, dans lequel l'élément de réaction (28) est allongé, et est inséré dans la structure de maçonnerie dans une direction généralement le long de sa longueur.

3. Procédé selon la revendication 2, dans lequel l'élément de réaction (28) est inséré dans la structure dans une direction qui est essentiellement transversale à l'alésage.

4. Procédé selon la revendication 2 ou 3, dans lequel, une fois inséré, l'élément de réaction (28) est au moins partiellement encastré dans la structure de maçonnerie (20), de façon telle que la maçonnerie résiste au mouvement de l'élément de réaction (28) dans une direction transversale à sa direction d'insertion dans la structure.

5. Procédé selon l'une quelconque des revendications 1 à 4, dans lequel l'alésage (18) est incurvé, la structure de maçonnerie (20) est une voûte en maçonnerie et l'élément de réaction (28) est inséré dans la structure depuis une face inférieure de la voûte.

6. Procédé selon l'une quelconque des revendications 1 à 5, dans lequel le procédé comprend l'étape consistant à percer initialement un trou pour l'élément de réaction, le trou rencontrant l'alésage, puis à insérer l'élément de réaction dans le trou.

7. Procédé selon la revendication 6, dans lequel le trou comprend une fente (22) formée en retirant du mortier d'entre les couches adjacentes des éléments de maçonnerie, tels que des briques.

8. Procédé selon la revendication 6 ou la revendication 7, dans lequel le diamètre du trou (22) pour l'élément de réaction augmente à mesure que l'élément s'étend dans la structure vers le perçage ou alésage.

9. Procédé selon la revendication 8, dans lequel le procédé comprend l'étape consistant à insérer l'élément de réaction (28) dans le trou, à amener l'élément de réaction pour qu'il s'engage avec le foret (10) et à exercer une force de contre-pression sur une partie de l'élément de réaction située à l'extérieur de la structure de maçonnerie afin de conférer au foret une force dirigée vers l'avant pour déplacer le foret vers l'avant.

10. Procédé selon la revendication 9, dans lequel le procédé comprend l'étape consistant à munir l'élément de réaction (36) d'un engrenage (42), qui engage des cannelures externes sur le foret de façon telle que la rotation de l'élément de réaction entraîne le déplacement vers l'avant du foret.

11. Procédé selon la revendication 9, dans lequel le procédé comprend l'étape consistant à munir l'élément de réaction d'un guide fileté (46) comportant une ouverture par laquelle le foret peut passer.

12. Procédé selon la revendication 11, dans lequel le guide fileté (46) comprend un élément annulaire ou partiellement annulaire (50), qui comporte un filetage interne, le filetage interne étant adapté pour s'engager avec un filetage complémentaire sur le foret.

13. Procédé selon la revendication 12, dans lequel, lors de la rotation du foret, l'engagement des filetages respectifs sur le foret (10) et la tête filetée (46) entraîne le déplacement du foret à travers la tête, l'élément de réaction fournissant une force de réaction pour assister le déplacement.

14. Appareil de perçage à travers une structure de maçonnerie (20), l'appareil comprenant :
des moyens de perçage (10) pour percer un alésage (18) dans la structure de maçonnerie (20), les moyens de perçage formant une partie d'un foret comportant une tête de perçage et une barre qui y est attachée ; et
**caractérisé en ce qu'**il comprend un élément de réaction (28) configuré pour une insertion dans la structure de maçonnerie séparément du foret, et adapté pour s'engager avec la structure de maçonnerie et avec les moyens de perçage en une position au sein de la structure de maçonnerie, afin de fournir une force de réaction permettant d'assister le déplacement des moyens de perçage à travers la structure à mesure qu'ils percent l'alésage.

15. Appareil selon la revendication 14, dans lequel l'élément de réaction comprend une extrémité qui est adaptée pour s'engager avec un trou ou une cannelure dans le foret (10) de façon telle que l'élément de réaction puisse être utilisé pour déplacer le foret vers l'avant le long de la trajectoire générale de déplacement du foret à travers la structure.

16. Appareil selon la revendication 15, dans lequel le foret est muni de cannelures externes ou de filetages.

17. Appareil selon la revendication 16, dans lequel l'élément de réaction (36) comprend un engrenage (42) qui est capable de s'engager avec des cannelures ou un filetage du foret de façon telle que la rotation de l'élément de réaction provoque le déplacement du foret le long de la trajectoire de perçage.

18. Appareil selon la revendication 17, dans lequel l'élément de réaction (28) comprend une barre allongée, l'engrenage étant prévu à une extrémité d'une barre, les dents d'engrenage faisant saillie dans une direction généralement parallèle à la barre, et la rotation de la barre autour de son axe propre provoquant la rotation de l'engrenage et de ce fait le déplacement du foret le long de la trajectoire de perçage.

19. Appareil selon la revendication 16, dans lequel l'élément de réaction (28) comprend une barre et une tête comportant une ouverture par laquelle le foret (10) peut passer.

20. Appareil selon la revendication 19, dans lequel la tête comprend un élément annulaire ou partiellement annulaire qui comporte un filetage interne, le filetage interne étant adapté pour s'engager avec un filetage complémentaire sur le foret, de façon telle que lors de la rotation du foret, l'engagement des filetages respectifs du foret et de la tête provoque le déplacement du foret le long de la trajectoire de perçage à travers la tête, l'élément de réaction fournissant une force de réaction qui assiste le déplacement.
